# EUROPEAN PATENT SPECIFICATION

(11) **EP 2 086 334 B1**
(45) Date of publication and mention of the grant of the patent: **30.05.2012**
(21) Application number: 07860863.5
(22) Date of filing: 04.12.2007
(51) Int. Cl.: A21C 9/08

(54) **CONVEYANCE DEVICE**
DYNAMISCHE FÖRDERVORRICHTUNG
DISPOSITIF DE TRANSPORT

(30) Priority: 04.12.2006 NL 1032988
(43) Date of publication of application: 12.08.2009
(73) Proprietor: Kaak, Johan Hendrik Bernard, 7011 DZ Gaanderen (NL)
(72) Inventor: PASCH, Lothar, 7061 WV Terborg (NL)
(74) Representative: Peters, Sebastian Martinus
(86) International application number: PCT/NL2007/000299
(87) International publication number: WO 2008/069642

(56) References cited:
- EP-A- 0 095 816
- DE-B- 1 057 997
- DE-B- 1 167 770
- FR-A- 1 395 149
- FR-A- 1 435 765
- FR-A- 1 448 134
- FR-A- 1 546 860
- FR-A- 2 242 839
- FR-A1- 2 213 892
- GB-A- 2 211 461
- US-A- 1 905 700
- US-A- 2 813 617
- US-A- 2 856 060
- US-A- 4 583 439
- US-A- 5 431 289

## Description

### BACKGROUND OF THE INVENTION

The invention relates to a device for conveying dough portions.

The invention furthermore relates to an assembly for forming dough portions comprising a device for conveying the dough portions and a device for treating the dough portions.

An example of a treatment carried out during production of for instance baguettes, incised loaves, buns, etcetera, is making an incision in the dough, particularly after the dough has proofed. For that purpose the dough portions can be supported on a flat conveyor conveying the dough portions during the further treatment. The use of a flat conveyor makes it possible to treat dough portions of highly diverse shapes and/or dimensions in the same device.

A drawback of the use of a flat conveyor is that the dough portions may move on the conveyor when the treatment subjects the dough product to a force having a component that is directed substantially parallel to the conveyor. A moved dough portion may further down the line in the production and/or packaging process cause great problems, particularly when said processes are highly automated and said automated production and/or packaging processes are adapted for handling products that need to be supplied at a predetermined position and/or orientation.

US 1,905,700 discloses a facing machine for facing crackers or cookies having dissimilar opposite faces and arrange the same in row formation. The machine comprises a deck providing a support and a facing conveyor passing over the upper face of the deck, wherein the facing conveyor comprises a pair of adjacently disposed belts forming a conveyance surface for in a conveyance direction conveying and supporting the crackers or cookies. In addition the machine comprises tilting plates for at least partially supporting the belts, and support members affixed to the rear faces of the plates, wherein the support members are pivotally secured to brackets which are adjustable transversely with respect to the deck by means of bolt-and-slot connections. Due to the angular adjustment provided by the bolt-and-slot connections, the distance between the belts may be varied to accommodate different sizes of articles.

It is an object of the invention to improve on this.

It is a further object to provide a device of the type mentioned in the preamble, with which movement of the dough portions, particularly in a direction transverse to the conveyance direction, can be substantially prevented.

It is a further object to provide a device of the type mentioned in the preamble to convey and support dough portions of highly diverse shapes and/or dimensions using the same device.

### SUMMARY OF THE INVENTION

According to one aspect, at least one of these objects is achieved with a device as described in claim 1. Advantageous embodiments are described in the dependent claims.

The conveyance means abuts the support device and is at least partially supported by it. The conveyance means can follow the profile of the support device. By selecting the wanted profile of the support device the position and/or the relief of the conveyance surface can be set and adjusted to the product to be conveyed and/or to the treatment the product is to be subjected to.

The relief can be selected such that the conveyance surface is provided with supporting walls, banks, ridges, elevations or the like, for counterbalancing substantially transversely directed treatment forces, and particularly a component of a force that is directed substantially parallel to the conveyance means, and which is exerted on the dough product during a treatment. The profile of the conveyance surface or relief is selected such so as to ensure substantially securing or fixing the position and/or orientation of the dough product, at least during treatment.

In one embodiment the device comprises a substantially flexible conveyance means.

In a simple embodiment the support device comprises mutually interchangeable relief plates. On the one hand a first relief plate can be adapted for setting a first relief for fixing a first dough product and a second relief plate can be adapted for setting a second relief, differing from the first relief, for fixing a second dough product in substantially the same treatment. On the other hand a first and second relief plate can be adapted for fixing a dough product during a first and second treatment, respectively.

In one embodiment the support device can be adjusted in parts for setting the shape of the cross-section of at least a side of the support device facing the conveyance means. Because said embodiment of a device according to the invention is provided with a support device that can be adjusted in part s, the support device itself can be adjusted for adapting the relief in order to convey, support and/or fix dough portions of highly diverse shapes and/or dimensions. In this embodiment it will not be necessary to interchange relief plates.

According to the invention, the support device comprises a first and a second support member, wherein the first support member can be displaced with respect to the second support member for adjusting the relief of the conveyance surface. By replacing the first and/or second support member the relief of the support device can be changed or even be neutralized

According to the invention, the first and second support member are placed adjacent to each other substantially parallel to the conveyance surface, and at least one of the support members can be moved substantially transverse to the conveyance direction, preferably substantially transverse to the conveyance surface. By moving at least one of the support members with respect to the other support member the support device can be provided with a relief. For instance the first support member can be moved further in the direction of the conveyance means than the second support member. As a result the part of conveyance means that is guided over the first support member will sit higher than the part of the conveyance means guided over the second support member. Thus a supporting wall is formed at the transition from the first to the second supporting member which supporting wall may form an abutment for counterbalancing a component of a force directed substantially transverse to the supporting wall.

According to the invention, the support device furthermore comprises a third support member, wherein the first, second and third support member are placed adjacent to each other, and wherein at least the middle support member can be placed recessed with respect to the outer support members for forming a recessed section in the conveyance surface. Three adjacently placed support members can form two supporting walls, as a result of which the position and/or orientation of the dough portion on the conveyance means can be controlled better. With this embodiment for instance a channel can be formed for placing for instance baguettes therein.

In one embodiment the recessed section, particularly as regards the depth and/or width, can be adapted to the dough portions to be conveyed. In one embodiment the support device is provided for that purpose with a series of adjacently placed support members which according to need can be displaced with respect to each other for forming the wanted relief of the conveyance surface and adjusting said relief.

In one embodiment the support members substantially extend in the conveyance direction. In other words, the supporting walls that can be formed by such a relief extend substantially parallel to the conveyance direction. In one embodiment the support members can be placed for providing a relief that changes substantially transverse to the conveyance direction.

In one embodiment the conveyance means is assembled from a number of conveyor belts that are placed substantially parallel. An advantage of the use of conveyor belts instead of a broad conveyor is that two adjacently placed belts can be displaced substantially independently from each other. As a result a more acute transition can be created. In addition it is possible to provide the conveyor belts with an individual biassing means for providing a belt tension so that conveyor belts that are displaced differently by the underlying supporting members can be held at tension nonetheless.

In one embodiment the conveyor belts are substantially cord-shaped or ribbon-shaped. In one embodiment the conveyor belts comprise a metal core and a synthetic sheath.

In one embodiment the support members are adapted for supporting one or more conveyor belts. The conveyor belts can be moved individually or in small groups for obtaining the wanted relief or for adapting the relief to the product to be treated. In one embodiment one or more conveyor belts are individually adjustable for adapting the relief of the conveyance surface. In one embodiment a number of conveyor belts are jointly adjustable for adapting the relief of the conveyance surface.

In one embodiment the support members at a side facing the conveyor belts, have been provided with one or more longitudinal grooves that extend substantially in the conveyance direction for guiding the conveyor belts therein. Due to the longitudinal grooves the positions of the conveyor belts, at least in a direction transverse to the conveyance direction, can be defined. In a simple embodiment the longitudinal grooves have a substantially V-shaped or U-shaped cross-section.

Particularly in V-shaped longitudinal grooves and a conveyor belt having a substantially round cross-section, pollution may accumulate near the bottom of the groove. In order to counteract this, in one embodiment the longitudinal grooves are provided with a cross-section that substantially has the same shape as a cross-section of at least a section of the conveyor belts to be guided.

In one embodiment two adjacent conveyor belts substantially abut each other in the conveyance surface.

In one embodiment the support members extend substantially between two circulating rollers of the conveyance means, the support members may extend over substantially the full distance between the circulating rollers.

In one embodiment one or more support members near both ends are provided with setting means for setting the displacement of the support members. In this way the displacement of the support member at the one end may be set differently than at the other end. Thus the relief may also change in the conveyance direction.

In one embodiment the device in the circulation of the conveyance means comprises cleansing and/or scraping means for cleaning the conveyance means.

In one embodiment the support device is substantially made of stainless steel and/or a synthetic material having a low friction coefficient.

From another aspect the invention provides an assembly for forming dough portions, comprising a device for conveying the dough portions according to any one of the preceding claims, and a device for treating the dough portions, wherein the device for treating the dough portions is placed at a side of the conveyance surface that faces away from the support device, for carrying out a treatment on the dough portions placed on the conveyance surface.

In one embodiment the relief of the conveyance surface is adapted for supporting and at least partially counterbalancing transverse forces, that means substantially transverse to the conveyance direction, that the dough portions might be subjected to during the treatment.

In one embodiment the relief of the conveyance surface is adapted for substantially fixing the dough portions on the conveyance surface, particularly during the treatment of the dough portions.

In one embodiment the device for treating the dough portions comprises a cutting device for making an incision in a side of the dough portions that substantially faces away from the conveyance surface.

In one embodiment the device for treating the dough portions comprises a packaging device for packaging the dough portions.

The aspects and measures described in this description and the claims of the application and/or shown in the drawings of this application may where possible also be used individually. Said individual aspects, such are for instance a conveyor having individual belt tension, and other aspects may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figures 1A, 1B, 1C show a number of views of a first exemplary embodiment of a device according to the invention;
Figures 2A, 2B, 2C, 2D and 2E show a number of views of a second exemplary embodiment of a device according to the invention;
Figures 3A, 3B and 3C show a number of views in cross-section of a support member and a conveyor belt placed thereon; and
Figure 4 shows a schematic view of an assembly of a conveyance device and a treatment device according to the invention.

### DETAILED DESCRIPTION OF THE DRAWINGS

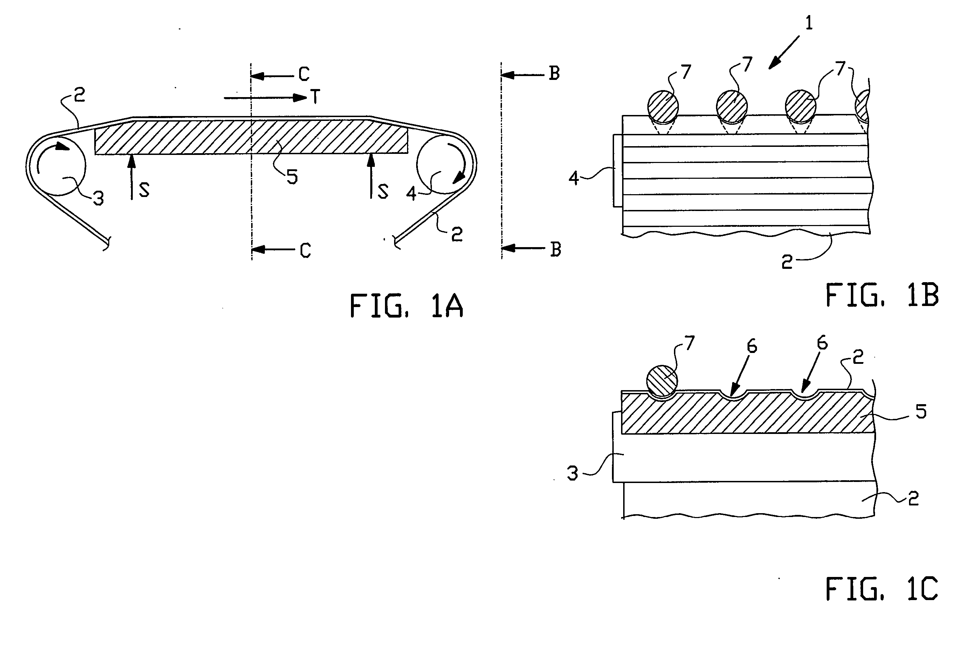

Figure 1 A shows a schematic side view of an exemplary embodiment of a device for conveying for instance dough portions. Said exemplary embodiment is provided with a circulating conveyance means 2 in the form of a conveyor guided over two circulating rollers 3, 4, and which when driven will move in conveyance direction T. A support device 5 is placed between the circulating rollers 3, 4, which device 5 rests on a support S such as a frame of the device. When the conveyor 2 is driven, it will slide over the support device 5 in the conveyance direction T. At a side facing the conveyor 2, the support device 5 is provided with a profile as indicated in figure 1C. Said profile comprises a number of adjacently situated channels 6 that extend substantially in the conveyance direction T. The dough portions 7 can be placed in said channels 6. On the one hand said channels 6 determine the position and/or orientation of the dough pieces 7, but they also retain said position or orientation when the dough portions 7 are treated.

For treating dough portions having another shape or dimension, the support device 5 can be interchanged with another support device which at a side facing the conveyor 2 is provided with another profile adapted to the shape and/or dimensions of the new dough portions. In this way differently shaped dough portions can be optimally supported and/or be fixed to their place on the conveyance device 1.

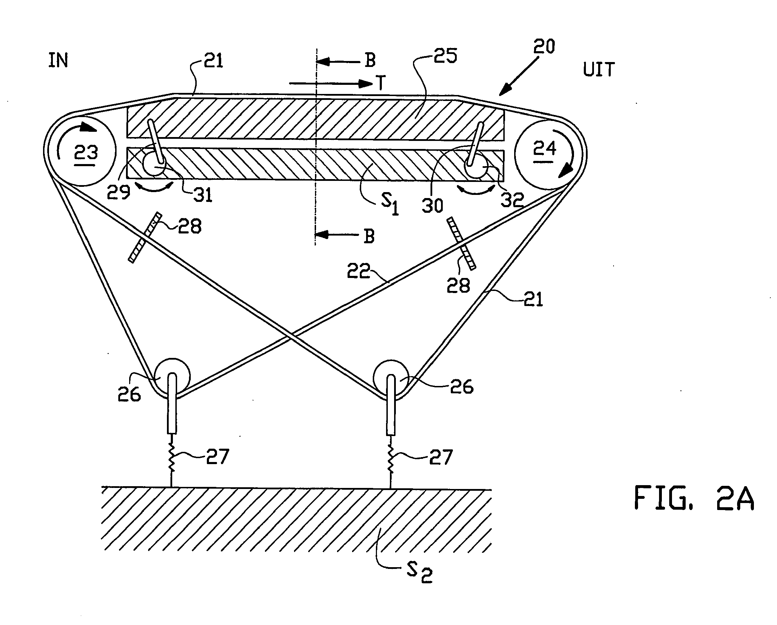

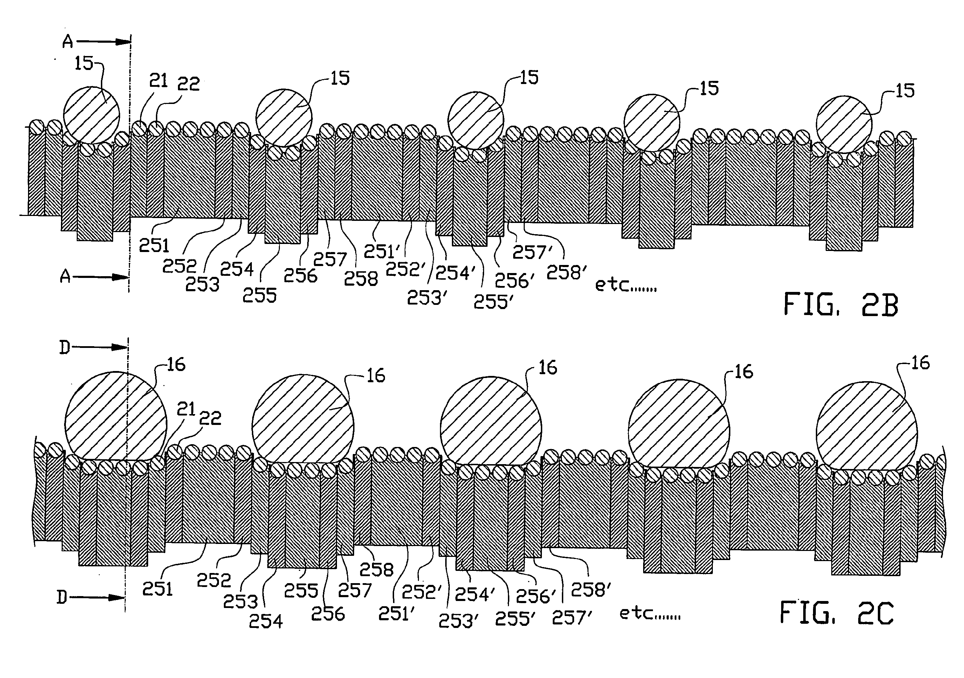

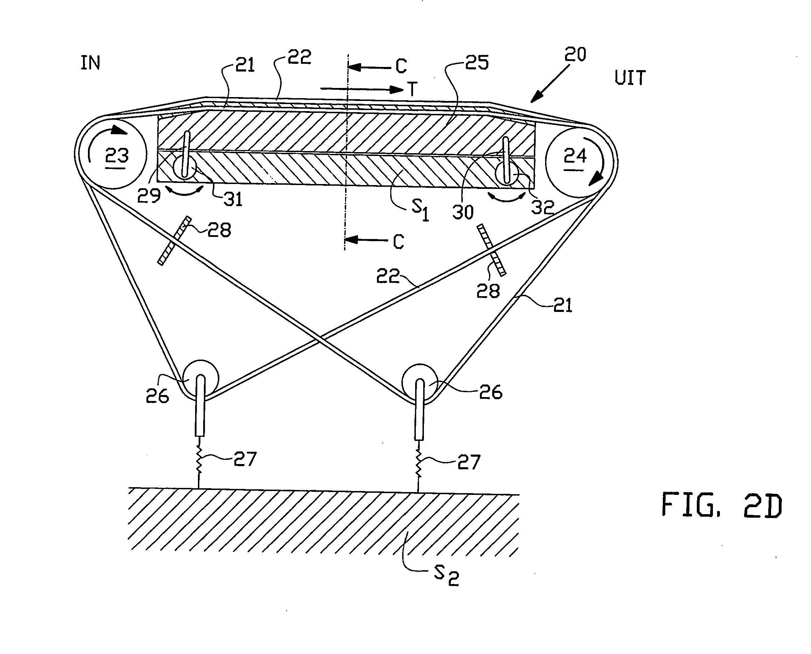

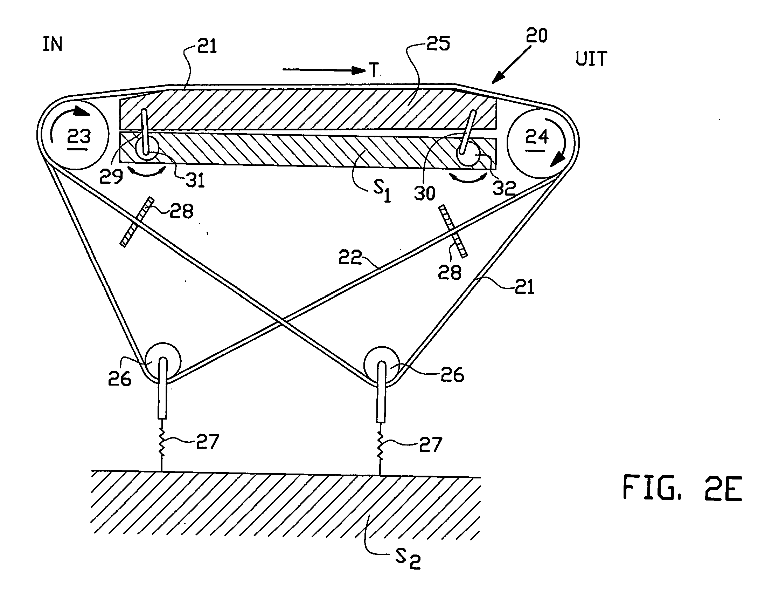

Instead of a conveyor 2 use can also be made of a number of adjacently placed conveyor belts. Such an exemplary embodiment is shown in figures 2A, 2B, 2C, 2D and 2E. Figure 2A shows a side view of a second embodiment of a conveyance device 20 according to the invention. The circulating conveyor belts 21, 22 are again guided around the circulating rollers 23, 24, wherein the conveyance part of the circulating belts 21, 22 slides over the support device 25 in a conveyance direction T.

In their circulation the conveyor belts 21, 22 are passed along biassing means for keeping the conveyor belts 21, 22 at tension. The biassing means comprise a circulating wheel 26 which by means of a spring 27 is connected to the frame S2 of the device. The conveyor belts 21, 22 are kept at tension by the springs 27. In the exemplary embodiment, as shown in figure 2A, all even belts 21 and all odd belts 22 are passed over different circulating rollers 26. In an alternative embodiment, particularly all belts 21, 22 may be provided with their own biassing device.

In the circulation of the conveyor belts 21, 22 cleansing means are furthermore placed for keeping the conveyor belts 21, 22 clean. In this exemplary embodiment said cleansing means are formed like a number of plates 28 provided with openings through which the conveyor belts 21, 22 are snugly passed. When the conveyor belts are dirty, the plates 28 will scrape the dirt from the conveyor belts 21, 22.

In the exemplary embodiment, as shown in figure 2A, the support device 25 is provided with a number of support members that can be set as regards height as described in more detail below. For setting the height of the support device 25, use can for instance be made of a cam 29 which on the one hand is rotatably connected to an eccentric 30, and on the other hand is rotatably connected to one or more of the support members 25. The eccentric 30 is placed on the frame S1 of the device. By rotating the eccentrics 31, 32 the height of the support member 25 can be set. By using two eccentrics 31, 32 it is also possible to set the height at the entrance side IN differently from the one at the exit side OUT, as schematically shown in figure 2E. As a result for instance the conveyor belts 21, 22 can be situated in substantially one plane near the entrance side IN, whereas the conveyor belts 21, 22 near the exit side OUT form a profile as for instance shown in figure 2B or 2C. Thus the profile of the conveyance surface can be set so that it also changes course in conveyance direction T.

Figure 2B shows a view in cross-section along the line B-B of figure 2A. Figure 2B shows a number of adjacently situated conveyor belts 21, 22 having a substantially circular cross-section. The conveyor belts 21, 22 abut an upper side of the support members 25. The device is provided with a large number of adjacently placed support members 251, 252, 253, ..., 258, etcetera, which can substantially be individually set as regards height. By setting the height of said support members the conveyance surface can be provided with channels in which the dough portions 15 can be placed. The channels are formed for optimally supporting the dough portion 15, and for fixing said dough portion 15 when carrying out a treatment step on said dough portions 15. For realising the wanted profile, as shown in figure 2B, the support members 254 and 256 have been moved downward, and the central support member 255 is placed even more downward, as shown in figure 2B. Please note that figure 2A is a view in cross-section along the line A-A of figure 2B.

In case the dough portions have another shape, as for instance shown in figure 2C, the setting of the support members 251, 252, ..., 258, etcetera can be adapted thereto so that a new profile arises for supporting and fixing the differently shaped dough portions 16. In case of these dough portions the support members 253, 257 are moved downward, and the central support members 254, 255 and 256 are placed even more downward. Please note that figure 2D shows a view in cross-section along the line D-D of figure 2C.

In this way the relief of the conveyance surface can be adapted to a large variety of shapes of the dough portions 15, 16 that are conveyed by means of the device according to the invention.

Because the height of the support members 25 at the entrance side can be set differently from the one at the exit side, as shown in figure 2E, the set profile near the entrance side IN may be different from the one near the exit side OUT. For instance the profile near the entrance side IN can be set as shown in figure 2C, whereas near the exit side OUT the support member 252 is placed downward and the support member placed even more downward, the central support members 254 and 255 remain unchanged, and the support members 256 and 257 are moved upward. Thus the profile near the exit side OUT is displaced to the left over a distance of one cord-width with respect to the profile near the entrance side IN. When the profile near the entrance side IN is different from the one near the exit side OUT, the position of the channel near the entrance side IN may differ from the one near the exit side OUT. The dough portions tend to go to the lowest point in the channel and thus, optionally while rolling, will move along with the displacement of the channel. In this way it is possible to displace the dough portions sideways so that at the exit side OUT the wanted pitch distance between the dough portions 15, 16 one to the other can be achieved, the centre-to-centre distance between the dough portions 15, 16 one to the other can be adapted or the dough portions 15, 16 can be aligned for further treatment such as packaging.

Please note that when all support members 251, 252, ..., 258 etcetera are placed in their highest position, the conveyance surface will be substantially flat.

Please also note that the conveyor belts near the circulating rollers 23, 24 are also substantially situated in one plane, as a result of which the device according to the invention is able to connect to a flat conveyor both at the entrance side and at the exit side.

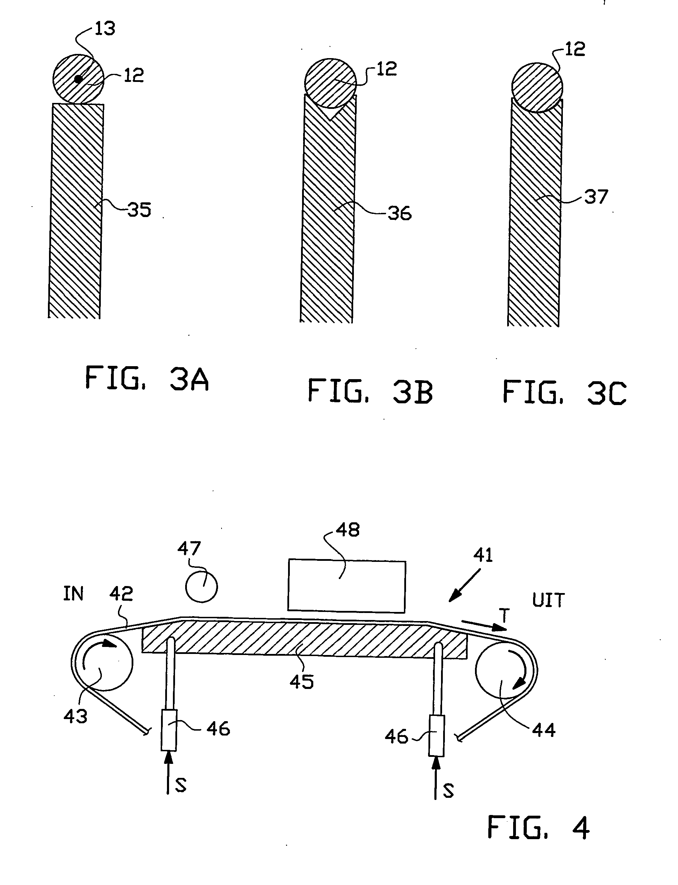

When the conveyor belts are substantially placed against each other, the conveyor belts can mutually ensure a substantially stable position in the conveyance surface. In such an embodiment the side of the support members facing the conveyor belts may for instance be flat, as shown in figure 3A.

In an alternative embodiment, as shown in figure 3B, the side of the support member 36 facing the conveyor belt 12 is provided with a V-shaped groove for -at least partially- accommodating the conveyor belt 12 therein. In this embodiment the conveyor belt 12 is held in its place by the groove; the conveyor belt 12 is fixed in a direction transverse to the conveyance direction by means of the groove. As a result a more stable conveyance surface is formed. The same effect can also be achieved by giving the surface of the support member 37 substantially the same shape as a part of the conveyor belt 12. The exemplary embodiments of figure 3B and 3C are particularly advantageous when the conveyor belts 12 are spaced apart.

In one exemplary embodiment the conveyor belt 12 can be provided with a metal core 13 and a sheath of synthetic material surrounding it.

Figure 4 shows a schematic side view of an assembly of a conveyance device 41 and a treatment device 48 for dough portions according to the invention. The assembly is provided with a circulating conveyance means 42, for instance according to one of the exemplary embodiments mentioned above. The conveyance means 42 is placed on the circulating rollers 43, 44 for driving a movement of the conveyance means 42 in the conveyance direction T. Underneath the conveyance means 42 there is a support device 45 which can be set as regards height by means of drive means 46 in the form of for instance a linear motor, hydraulic or pneumatic cylinders, piezoelectric drives, and the like. The drive devices are placed so as to be supported on the frame S of the assembly.

In this exemplary embodiment near the entrance side IN a pressure roller 47 is placed above the conveyance means 42 for -at least partially- pressing the pieces of dough into the profile, particularly the channels. As a result the pieces of dough are able to obtain a further fixation in the relief, particularly the channels. The pieces of dough thus fixed, are then supplied to a treatment device 48, such as for instance a cutting device for making an incision in the pieces of dough.

After the treatment device 48, when the treatment has been completed, the profile for fixing the pieces of dough can be neutralized and near the circulating roller 44 at the exit side OUT of the conveyance device 41, the dough portions sit freely on a substantially flat conveyance means 42.

The above description is included to illustrate the operation of exemplary embodiments of the invention and not to limit the scope of the invention. Starting from the above explanation many variations that fall within the spirit and scope of the present invention will be evident to an expert.

## Claims

1. Device (20) for conveying dough portions, comprising
a circulating conveyance means (21, 22) forming a conveyance surface for in a conveyance direction (T) conveying and supporting the dough portions,
a support device (25) for at least partially supporting the conveyance means (21, 22),
wherein the support device (25) in a direction substantially transverse to the conveyance surface is adjustable in members (251, 252, 253, 254, 255, 256, 257, 258, ...) for setting the shape of the cross-section of at least a side of the support device (25) facing the conveyance means (21, 22),
**characterised in that** the support device (25) comprises a first (254), second (255) and third (256) support member, wherein the first support member (254) can be displaced with respect to the second support member (255), wherein the first (254), second (255) and third (256) support member are placed adjacent to each other substantially transverse to the conveyance direction (T) and extend substantially in the conveyance direction (T), wherein the adjustable members are substantially vertically adjustable, and wherein at least the middle support member (255) can be placed recessed with respect to the outer support members (254, 256) for forming a recessed section in the conveyance surface.

2. Device according to claim 1, wherein the adjustable members at least at an in conveyance direction spaced apart first (31) and second (32) position can be set differently for setting a first shape of the cross-section at the first position (31) and a second shape, differing from the first shape, of the cross-section at the second position (32).

3. Device according to claim 1 or 2, wherein the recessed section, particularly as regards the depth and/or width, can be adapted to the dough portions to be conveyed.

4. Device according to any one of the preceding claims, wherein the conveyance means is assembled from a number of conveyor belts that are placed substantially parallel, preferably wherein the conveyor belts are cord-shaped or ribbon-shaped and/or wherein the conveyor belts comprise a metal core and a synthetic sheath.

5. Device according to claim 4, wherein the support members are adapted for supporting one or more conveyor belts.

6. Device according to claim 5, wherein the support members at a side facing the conveyor belts, have been provided with one or more longitudinal grooves that extend substantially in the conveyance direction for guiding the conveyor belts therein.

7. Device according to claim 6, wherein the longitudinal grooves have a substantially V-shaped or U-shaped cross-section or wherein a cross-section of the longitudinal grooves substantially has the same shape as a cross-section of at least a section of the conveyor belts to be guided.

8. Device according to any one of the claims 4-7, wherein one or more of the conveyor belts are individually adjustable for adapting the relief of the conveyance surface and/or, wherein a number of the conveyor belts are jointly adjustable for adapting the relief of the conveyance surface.

9. Device according to any one of the claims 4-8, wherein at least two adjacent conveyor belts substantially abut each other in the conveyance surface.

10. Device according to any one of the preceding claims, wherein the support members substantially extend over substantially the full distance between the circulating rollers of the conveyance means.

11. Device according to any one of the preceding claims, wherein the support device is adapted for forming a relief that changes substantially transverse to the conveyance direction.

12. Device according to any one of the preceding claims, wherein the device in the circulation of the conveyance means comprises cleansing and/or scraping means for cleaning the conveyance means.

13. Assembly for forming dough portions, comprising:
a device for conveying the dough portions according to any one of the preceding claims, and
a device for treating the dough portions, wherein the device for treating the dough portions is placed at a side of the conveyance surface that faces away from the support device, for carrying out a treatment on the dough portions placed on the conveyance surface.

14. Assembly according to claim 13, wherein the relief of the conveyance surface is adapted for supporting and at least partially counterbalancing transverse forces that the dough portions might be subjected to during the treatment and/ or wherein the relief of the conveyance surface is adapted for substantially fixing the dough portions on the conveyance surface.

15. Assembly according to claim 13 or 14, wherein the device for treating the dough portions comprises a cutting device for making an incision in a side of the dough portions that substantially faces away from the conveyance surface.

## Patentansprüche

1. Einrichtung (20) zum Fördern von Teigportionen, umfassend
ein umlaufendes Fördermittel (21, 22), das eine Förderoberfläche zum Fördern und Tragen der Teigportionen in einer Förderrichtung (T) bildet,
eine Trageeinrichtung (25), um das Fördermittel (21, 22) zumindest teilweise zu tragen,
wobei die Trageeinrichtung (25) in einer Richtung im Wesentlichen quer zur Förderoberfläche in Elementen (251, 252, 253, 254, 255, 256, 257, 258, ...) zum Einstellen der Form des Querschnitts mindestens einer Seite der Trageeinrichtung (25), die dem Fördermittel (21, 22) zugewandt ist, einstellbar ist,
**dadurch gekennzeichnet, dass** die Trageeinrichtung (25) ein erstes (254), zweites (255) und drittes (256) Trageelement umfasst, wobei das erste Trageelement (254) bezogen auf das zweite Trageelement (255) verlagert werden kann, wobei das erste (254), zweite (255) und dritte (256) Trageelement im Wesentlichen quer zur Förderrichtung (T) benachbart zueinander angeordnet sind und sich im Wesentlichen in der Förderrichtung (T) erstrecken, wobei die einstellbaren Elemente im Wesentlichen vertikal einstellbar sind, und wobei zumindest das mittlere Trageelement (255) bezogen auf die äußeren Trageelemente (254, 256) zurückgesetzt angeordnet werden kann, um einen zurückgesetzten Abschnitt in der Förderoberfläche zu bilden.

2. Einrichtung nach Anspruch 1, wobei die einstellbaren Elemente zumindest an einer in Förderrichtung beabstandeten ersten (31) und zweiten (32) Position unterschiedlich eingestellt werden können, um eine erste Form des Querschnitts an der ersten Position (31) und eine zweite Form des Querschnitts unterschiedlich von der ersten Form an der zweiten Position (32) einzustellen.

3. Einrichtung nach Anspruch 1 oder 2, wobei der zurückgesetzte Abschnitt, insbesondere hinsichtlich Tiefe und/oder Breite, an die zu fördernden Teigportionen angepasst werden kann.

4. Einrichtung nach einem der vorhergehenden Ansprüche, wobei das Fördermittel aus einer Anzahl Förderbänder zusammengesetzt ist, die im Wesentlichen parallel angeordnet sind, wobei die Förderbänder vorzugsweise gurtförmig oder bandförmig sind und/oder wobei die Förderbänder einen Metallkern und eine synthetische Ummantelung umfassen.

5. Einrichtung nach Anspruch 4, wobei die Trageelemente eingerichtet sind, ein oder mehrere Förderbänder zu tragen.

6. Einrichtung nach Anspruch 5, wobei die Trageelemente an einer Seite, die den Förderbändern zugewandt ist, mit einer oder mehrerer Längsnuten versehen sind, die sich im Wesentlichen in der Förderrichtung erstrecken, um die Förderbänder darin zu führen.

7. Einrichtung nach Anspruch 6, wobei die Längsnuten einen im Wesentlichen V-förmigen oder U-förmigen Querschnitt aufweisen oder wobei ein Querschnitt der Längsnuten im Wesentlichen die gleiche Form wie ein Querschnitt wenigstens eines Abschnitts der zu führenden Förderbänder aufweist.

8. Einrichtung nach einem der Ansprüche 4-7, wobei eines oder mehrere der Förderbänder individuell einstellbar sind, um das Relief der Förderoberfläche anzupassen und/oder wobei eine Anzahl der Förderbänder gemeinsam einstellbar sind, um sich dem Relief der Förderoberfläche anzupassen.

9. Einrichtung nach einem der Ansprüche 4-8, wobei mindestens zwei benachbarte Förderbänder in der Förderoberfläche im Wesentlichen aneinander anliegen.

10. Einrichtung nach einem der vorhergehenden Ansprüche, wobei sich die Trageelemente im Wesentlichen über im Wesentlichen den ganzen Abstand zwischen den umlaufenden Rollen des Fördermittels erstrecken.

11. Einrichtung nach einem der vorhergehenden Ansprüche, wobei die Trageeinrichtung eingerichtet ist, um ein Relief zu bilden, das sich im Wesentlichen quer zur Förderrichtung ändert.

12. Einrichtung nach einem der vorhergehenden Ansprüche, wobei die Einrichtung im Umlauf des Fördermittels Säuberungs- und/oder Schabemittel zum Reinigen des Fördermittels umfasst.

13. Anordnung zum Formen von Teigportionen, umfassend
eine Einrichtung zum Fördern der Teigportionen gemäß einem der vorstehenden Ansprüche und
eine Einrichtung zum Behandeln der Teigportionen, wobei die Einrichtung zum Behandeln der Teigportionen an einer Seite der Förderoberfläche angeordnet ist, die von der Trageeinrichtung abgewandt ist, um eine Behandlung der Teigportionen auszuführen, die sich auf der Förderoberfläche befinden.

14. Anordnung nach Anspruch 13, wobei das Relief der Förderoberfläche angepasst ist, um Querkräfte, denen die Teigportionen während der Behandlung ausgesetzt sein können, aufzunehmen und zumindest teilweise auszugleichen, und/oder wobei das Relief der Förderoberfläche angepasst ist, um die Teigportionen im Wesentlichen auf der Förderoberfläche zu fixieren.

15. Anordnung nach Anspruch 13 oder 14, wobei die Einrichtung zum Behandeln der Teigportionen eine Schneideinrichtung zum Ausführen eines Einschnitts in einer Seite der Teigportionen umfasst, die im Wesentlichen von der Förderoberfläche abgewandt ist.

## Revendications

1. Dispositif (20) pour transporter des parties de pâte, comprenant :
des moyens de transport tournants (21, 22) formant une surface de transport pour transporter et supporter les parties de pâte dans une direction de transport (T),
un dispositif de support (25) pour supporter au moins partiellement les moyens de transport (21, 22),
dans lequel le dispositif de support (25) dans une direction sensiblement transversale à la surface de transport, est réglable du point de vue des éléments (251, 252, 253, 254, 255, 256, 257, 258,...) pour placer la forme de la section transversale d'au moins un côté du dispositif de support (25) en face des moyens de transport (21, 22),
**caractérisé en ce que** le dispositif de support (25) comprend un premier (254), un deuxième (255) et un troisième (256) élément de support, dans lequel le premier élément de support (254) peut être déplacé par rapport au deuxième élément de support (255), dans lequel les premier (254), deuxième (255) et troisième (256) éléments de support sont placés de manière adjacente entre eux sensiblement de manière transversale à la direction de transport (T) et s'étendent sensiblement dans la direction de transport (T), dans lequel les éléments ajustables sont ajustables de manière sensiblement verticale, et dans lequel au moins l'élément de support central (255) peut être enfoncé par rapport aux éléments de support externes (254, 256) afin de former une section évidée dans la surface de transport.

2. Dispositif selon la revendication 1, dans lequel les éléments ajustables au moins dans des première (31) et deuxième (32) positions espacées dans la direction de transport peuvent être placés différemment pour placer une première forme de la section transversale au niveau de la première position (31) et une deuxième forme, différente de la première forme, de la section transversale au niveau de la deuxième position (32).

3. Dispositif selon la revendication 1 ou 2, dans lequel la section évidée, en particulier en ce qui concerne la profondeur et/ou la largeur, peut être adaptée aux parties de pâte à transporter.

4. Dispositif selon l'une quelconque des revendications précédentes, dans lequel les moyens de transport sont assemblés à partir d'un nombre de courroies transporteuses qui sont placées de manière sensiblement parallèle, de préférence dans lequel les courroies transporteuses sont en forme de corde ou en forme de ruban et/ou dans lequel les courroies transporteuses comprennent une âme métallique et une gaine synthétique.

5. Dispositif selon la revendication 4, dans lequel les éléments de support sont adaptés pour supporter une ou plusieurs courroies transporteuses.

6. Dispositif selon la revendication 5, dans lequel les éléments de support sur un côté faisant face aux courroies transporteuses, ont été prévus avec une ou plusieurs rainures longitudinales qui s'étendent sensiblement dans la direction de transport pour guider les courroies transporteuses dans ces dernières.

7. Dispositif selon la revendication 6, dans lequel les rainures longitudinales ont une section transversale sensiblement en forme de V ou en forme de U, ou bien dans lequel une section transversale des rainures longitudinales a sensiblement la même forme qu'une section transversale d'au moins une section des courroies transporteuses à guider.

8. Dispositif selon l'une quelconque des revendications 4 à 7, dans lequel une ou plusieurs des courroies transporteuses sont individuellement réglables pour adapter le relief de la surface de transport et/ou dans lequel un certain nombre de courroies transporteuses sont ajustables conjointement pour adapter le relief de la surface de transport.

9. Dispositif selon l'une quelconque des revendications 4 à 8, dans lequel au moins deux courroies transporteuses adjacentes viennent sensiblement en butée l'une contre l'autre dans la surface de transport.

10. Dispositif selon l'une quelconque des revendications précédentes, dans lequel les éléments de support s'étendent sensiblement sur toute sensiblement la distance entre les rouleaux circulants des moyens de transport.

11. Dispositif selon l'une quelconque des revendications précédentes, dans lequel le dispositif de support est adapté pour former un relief qui change sensiblement, de manière transversale à la direction de transport.

12. Dispositif selon l'une quelconque des revendications précédentes, dans lequel le dispositif lors de la circulation des moyens de transport comprend des moyens de nettoyage et/ou de raclage pour nettoyer les moyens de transport.

13. Ensemble pour former des parties de pâte, comprenant :
un dispositif pour transporter les parties de pâte selon l'une quelconque des revendications précédentes, et
un dispositif pour traiter les parties de pâte, dans lequel le dispositif pour traiter les parties de pâte est placé sur un côté de la surface de transport qui est orienté à l'opposé du dispositif de support, pour réaliser un traitement sur les parties de pâte placées sur la surface de transport.

14. Ensemble selon la revendication 13, dans lequel le relief de la surface de transport est adapté pour supporter et au moins partiellement équilibrer les forces transversales auxquelles les parties de pâte peuvent être soumises pendant le traitement et/ou dans lequel le relief de la surface de transport est adapté pour fixer sensiblement les parties de pâte sur la surface de transport.

15. Ensemble selon la revendication 13 ou 14, dans lequel le dispositif pour traiter les parties de pâte comprend un dispositif de coupe pour réaliser une incision dans un côté des parties de pâte qui est sensiblement orienté à l'opposé de la surface de transport.
